# FASCICULE DE BREVET EUROPEEN

(11) **EP 2 316 618 B1**
(45) Date de publication et mention de la délivrance du brevet: **14.12.2016**
(21) Numéro de dépôt: 10189441.8
(22) Date de dépôt: 29.10.2010
(51) Int. Cl.: B25B 27/00, B25B 23/14, B25B 13/50, G01B 3/00

(54) **Procédé de contrôle du jeu des différentes rotules présentes sur un train de véhicule.**
Verfahren zur Messung des Spiels eines Gelenkes eines Kraftfahrzeugsrahmens.
Method for measuring clearance of articulations on a vehicle frame.

(30) Priorité: 30.10.2009 FR 0957691
(43) Date de publication de la demande: 04.05.2011
(73) Titulaire: Peugeot Citroën Automobiles SA, 78140 Vélizy-Villacoublay (FR)
(72) Inventeur: Roy, Jean-Marie, 95170 Deuil-la-Barre (FR); Weissenbacher, Thierry, 92390 Villeneuve-la-Garenne (FR)

(56) Documents cités:
- DE-B3- 10 260 175
- JP-A- 2004 050 336
- US-A- 4 334 443
- US-A- 5 365 809
- US-A1- 2009 235 785
- US-B1- 6 557 441

## Description

La présente invention concerne un procédé de contrôle du jeu des différentes rotules présentes sur un train de véhicule, en particulier sur un train avant d'un véhicule automobile.

Entre le châssis d'un véhicule, en particulier d'un véhicule automobile, et les éléments non suspendus liés à ses roues se trouvent les dispositifs de suspension et de direction qui comportent des articulations destinées à compenser les débattements des roues : les rotules.

Ces rotules sont montées à la jonction des triangles ou bras de suspension avec les biellettes qui assurent le maintien de la géométrie des trains lors des débattements. On en trouve aussi à l'extrémité des biellettes de direction, et à une extrémité de la biellette de barre anti-devers.

Un jeu excessif dans les rotules de direction, par exemple, se ressent au volant, particulièrement lorsqu'on braque à fond. L'excès de jeu des rotules de suspension provoque des claquements, et a pour résultat un risque d'altération du comportement du véhicule en virages.

Il y a, par conséquent, nécessité de contrôler le jeu des rotules présentes sur les trains des véhicules, non seulement en usine terminale de fabrication automobile, mais aussi en atelier d'après-vente ou de concession automobile, ou encore en centre de contrôle technique.

Actuellement, ces jeux de rotules sont, le plus souvent, contrôlés de manière sensorielle et approximative par un opérateur de contrôle et au moyen d'un outil de type barre à mines.

Par ailleurs, différents procédés de mesure de rotation ou d'angle de pièces et différents outils de mesure utilisés dans ces procédés sont connus de l'art antérieur.

Le document EP 0 985 910 B1 décrit une structure d'installation d'un détecteur de rotation, qui comprend un élément de support pour supporter de manière rotative un arbre rotatif et un détecteur de rotation pour détecter l'amplitude de la rotation de l'arbre rotatif. Dans cette structure, le détecteur de rotation est fixé à l'élément de support de telle sorte qu'un élément d'entrée du détecteur de rotation est couplé à l'arbre rotatif pour empêcher toute rotation relative et l'arbre d'entrée est en grande partie coaxial. La structure comporte aussi un moyen de transmission de rotation, qui permet un désalignement entre l'axe de l'arbre d'entrée et l'axe de l'arbre rotatif par une déformation élastique et limite la rotation relative entre l'arbre d'entrée et l'arbre rotatif. Ce moyen de rotation inclut une chambre d'alésage fournie à une extrémité de l'arbre rotatif ou de l'arbre d'entrée, un arbre d'accouplement fourni à une extrémité de l'autre extrémité de l'arbre rotatif et de l'arbre d'entrée et situé dans la chambre d'alésage, et un coupleur élastique pour accoupler de manière élastique la chambre d'alésage avec l'arbre d'accouplement. Ce coupleur inclut une portion d'accouplement engageant la chambre d'alésage à pivoter complètement et une portion d'assemblage recevant l'arbre d'accouplement à pivoter complètement.

Le document US 5 005 451 décrit un outillage de montage d'une valve d'angle, qui comporte un corps de réception et de maintien dont la forme s'inscrit sensiblement dans un cube. Ce corps comporte une cavité pour recevoir par concordance des formes le corps d'une valve d'angle, ainsi que des conduits ou passages formés dans les côtés dudit corps. Dans ces passages, des parties en extension avant, arrière et latérale de la valve peuvent venir s'engager et faire saillie. Un manche de forme allongée, de longueur fixe ou bien variable, s'étend à partir de la face inférieure du corps de réception et de montage de l'outillage.

Le document DE 29822262 U décrit une tête de clé qui s'étend dans un plan sensiblement orthogonal à l'axe de la partie d'extrémité de la clé destinée à s'adapter sur la partie rotative d'un outil.

Le document JP 2003 118993 décrit un dispositif de mesure - ou capteur - d'angle de braquage pour un engin élévateur à fourche. Le dispositif est placé au-dessus d'un pivot de fusée qui supporte de manière mobile une roue de direction prévue à chaque extrémité d'un essieu arrière.

JP 2004 050336 décrit un outillage permettant la mesure du jeu de rotules présentes sur un train de véhicule.

Le but de la présente invention est de fournir un procédé de contrôle du jeu des différentes rotules présentes sur un train de véhicule, en particulier sur un train avant de véhicule automobile, qui s'applique à tous types de véhicules et dans tous les lieux de contrôle technique.

Pour parvenir à ce but, la présente invention a pour objet un procédé conformément à l'objet de la revendication 1.

Le train de véhicule peut être un train avant et les rotules présentes sur le train avant sont alors l'une ou plusieurs des rotules suivantes : la rotule inférieure montée sur le triangle de suspension, la rotule de la biellette de barre anti-devers, la rotule de la biellette de direction.

La valeur de seuil de conformité est définie préalablement dans le cahier des charges de chaque rotule en fonction de l'application et du fournisseur de rotule.

D'autres buts, avantages et caractéristiques de l'invention apparaîtront dans la description qui suit d'un mode de réalisation préféré, non limitatif de l'objet et de la portée de la présente demande de brevet, accompagnée de dessins dans desquels :
- la figure 1 est une vue en perspective d'un exemple de réalisation de l'outillage selon la présente invention, permettant la mesure du jeu des rotules d'un train de véhicule,
- la figure est une vue frontale, en coupe, de l'outillage de la figure 1,
- la figure 3 représente une rotule inférieure montée sur le triangle de suspension d'un véhicule pour l'articulation sur le pivot, et
- la figure 4 représente l'outillage de l'invention en position sur le triangle de suspension de la figure 2 pour la mesure du jeu de la rotule inférieure.

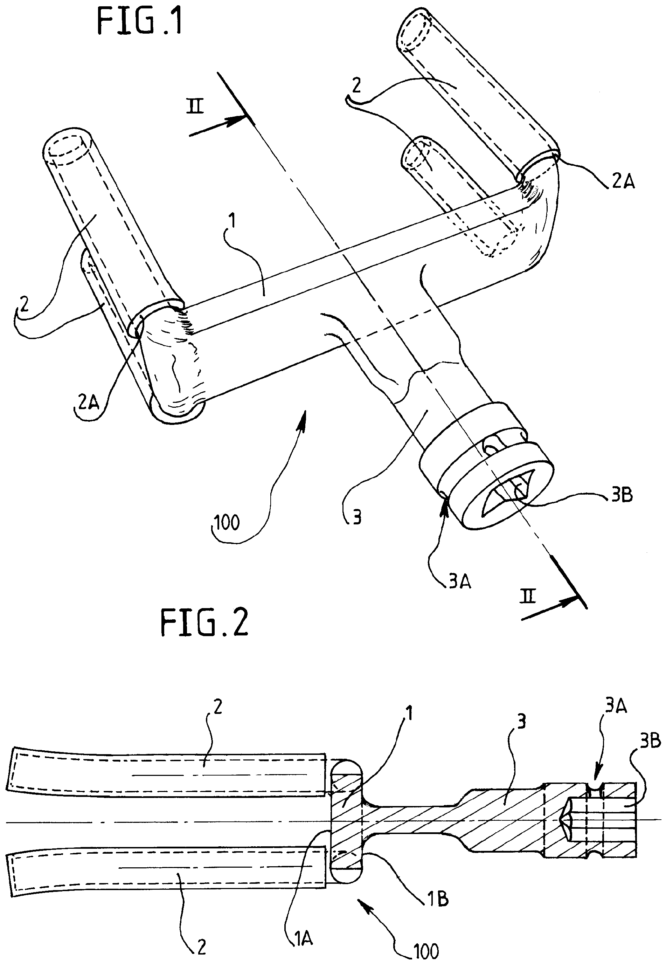

En référence aux dessins des figures 1 et 2, on a représenté un exemple de réalisation d'un outillage selon la présente invention destiné à la mesure du jeu de différentes rotules présentes sur un train de véhicule.

L'outillage, de référence générale 100, comporte :
- une partie centrale ou « semelle », de référence générale 1, sensiblement plane et présentant sensiblement la forme d'un rectangle,
- un ensemble de quatre éléments tubulaires ou « griffes » 2, de forme allongée, sensiblement perpendiculaires au plan de la semelle 1, en extension à partir d'une première face 1A de ladite semelle 1, réparties aux quatre angles du rectangle formant la semelle, et
- un élément de forme cylindrique ou « manche » 3, également sensiblement perpendiculaire au plan de la semelle 1, en extension à partir de la face opposée 1B à ladite première face 1A de la semelle 1.

Les quatre griffes 2 sont destinées, comme il sera décrit plus loin dans le présent texte, à prendre en tenailles une pièce du train sur laquelle est montée solidairement la rotule dont on mesure le jeu.

Le manche 3 est adapté à recevoir une clé dynamométrique, qui permet l'application d'un couple mécanique suffisant pour mesurer la valeur du jeu de la rotule.

Selon une variante de réalisation non représentée, les griffes 2 peuvent être montées réglables en écartement selon les deux directions du rectangle. A cette fin, les griffes peuvent être montées sur des glissières de la semelle, ou bien dans des lumières oblongues dirigées selon les deux directions du rectangle.

Les griffes 2 sont avantageusement recouvertes d'une gaine protectrice 2A en matière élastique, de type caoutchouc par exemple, de manière à protéger la pièce du train prise en tenailles.

L'embout 3A du manche 3 présente un alésage 3B de section carrée adapté à recevoir une clé dynamométrique pour l'application du couple mécanique mentionné précédemment.

On va maintenant décrire le procédé de contrôle du jeu de rotules selon la présente invention, lequel procédé utilise un outillage unique, tel que celui décrit ci-dessus, pour toutes les rotules présentes sur un train de véhicule, en particulier sur un train avant de véhicule automobile.

Le procédé est décrit dans son application à une rotule inférieure de triangle de suspension, mais il est applicable *mutatis mutandis* aux autres rotules du train de véhicule.

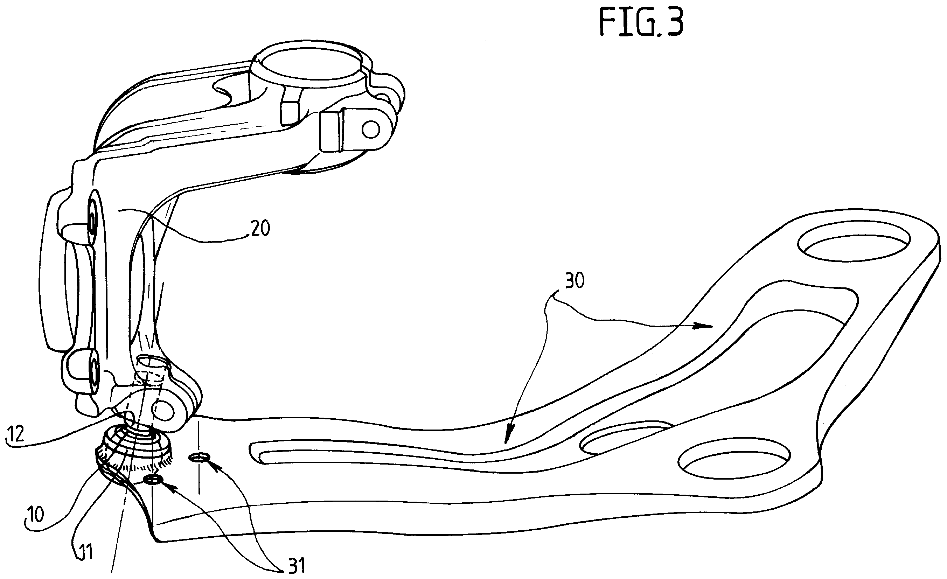

Une rotule inférieure de triangle de suspension est représentée sur le dessin de la figure 3.

La rotule 10 permet l'articulation entre le pivot 20 et la triangle de suspension 30. La rotule 10 est montée dans le boîtier de la palette rotule, de référence 11, relié solidairement au triangle 30 par l'intermédiaire de boulons représentés seulement par les orifices 31. Le pivot 20 est monté sur la queue de rotule 12.

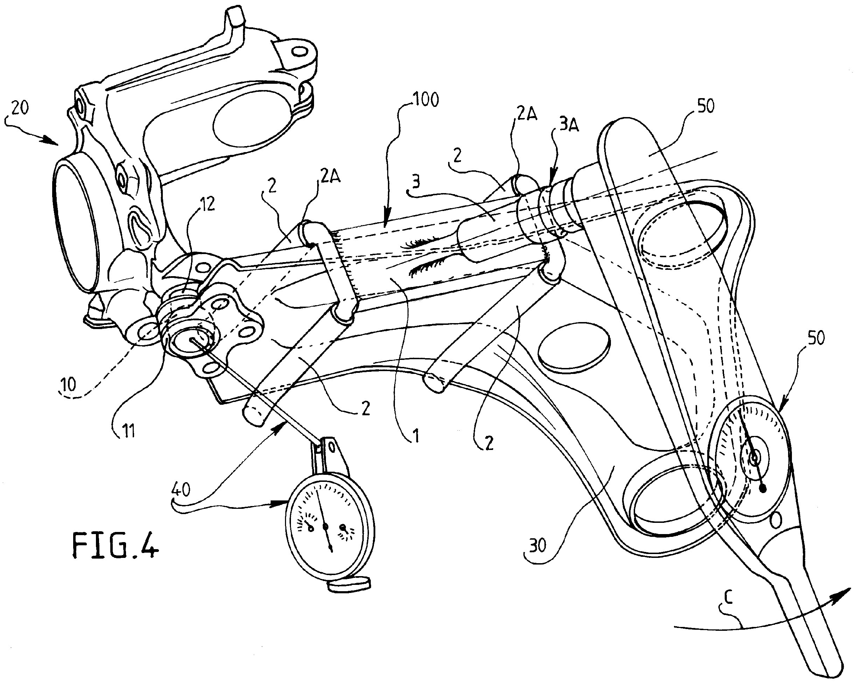

Les étapes du procédé sont les suivantes, en référence au dessin de la figure 4 :
- on positionne le véhicule de telle sorte qu'il ne repose plus sur ses roues et que l'effet des ressorts de suspension ou barres de torsion des suspensions soit annulé,
- on place un comparateur 40 sur le boîtier de la palette rotule 11,
   - on met en position un outillage 100, conforme à celui décrit ci-dessus, sur une partie du triangle 30, comme représenté sur la figure 4,
   - on loge une clé dynamométrique 50 dans l'alésage 3B de l'embout 3A du manche 3 de l'outillage,
   - on applique, à l'aide de la clé dynamométrique 50, un couple mécanique « C » de valeur prédéterminée sur le triangle 30,
   - on lit la valeur « j » du jeu de la rotule sur le comparateur 40, et
   - on compare cette valeur « j » à une valeur de seuil de conformité prédéfinie « J », la rotule étant déclarée conforme si ladite valeur du jeu mesurée « j » est inférieure à ladite valeur de seuil « J ».

Il importe de noter que le jeu « j », résultant de l'application du couple « C », est le jeu sur la rotule 10 en elle-même et sur le boîtier de la palette 11.

A titre d'exemple non limitatif de l'étendue et de la portée de la présente invention, on peut appliquer sur le triangle un couple mécanique de 100 N-m (newton-mètre) à l'aide de la clé dynamométrique, et la valeur de seuil « J » peut être définie à une valeur de 0,1 mm.

Si la valeur de déplacement « j » est inférieure à 0,1 mm, la rotule est déclarée conforme, tandis que si la valeur de déplacement « j » est supérieure à 0,1 mm, la rotule est changée.

La valeur de seuil de conformité « J » est définie préalablement dans le cahier des charges de chaque rotule en fonction de l'application et du fournisseur de rotule.

L'outillage 100 selon l'invention permet de s'adapter aux divers endroits des trains où sont présentes les rotules. Ainsi, pour un train avant de véhicule automobile, il permet de s'adapter et de permettre le contrôle, non seulement de la rotule inférieure du triangle de suspension, mais également de la rotule de la biellette de barre anti-devers et de la rotule de la biellette de direction.

L'outillage de la présente invention présente également l'avantage de permettre la mesure du jeu des rotules avec une simple clé dynamométrique et un simple comparateur.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Procédé de contrôle du jeu de différentes rotules présentes sur un train de véhicule, **caractérisé par** les étapes suivantes, prises en combinaison :
- on positionne le véhicule de telle sorte qu'il ne repose plus sur ses roues et que l'effet des ressorts de suspension ou barres de torsion des suspensions soit annulé,
- puis, pour chacune des rotules,
- on place un comparateur (40) sur la rotule à mesurer (10) ou sur un élément lié rigidement à la rotule, de manière à mesurer le jeu de cette dernière,
- on met en position un outillage (100) prenant en tenailles une partie de la pièce (30) du train sur laquelle est solidairement montée la rotule (10) et comportant une partie d'extrémité (3A) formant une interface de connexion adaptée à recevoir un outil d'application d'un couple mécanique suffisant pour mesurer la valeur du jeu de ladite rotule,
- on loge une clé dynamométrique (50) dans la partie d'extrémité (3A) de l'outillage (100),
- on applique, à l'aide de la clé dynamométrique (50), un couple mécanique de valeur prédéterminée sur la ladite partie de pièce (30) du train,
- on lit la valeur (« j ») du jeu de la rotule (10) sur le comparateur (40), et
- on compare cette valeur (« j ») à une valeur de seuil (« J ») de conformité prédéfinie, la rotule (10) étant déclarée conforme si ladite valeur du jeu (« j ») est inférieure à ladite valeur de seuil (« J »).

2. Procédé de contrôle selon la revendication 1, **caractérisé en ce que** le train de véhicule est un train avant et les rotules présentes sur le train avant sont l'une ou plusieurs des rotules suivantes : la rotule inférieure montée sur le triangle de suspension, la rotule de la biellette de barre anti-devers, la rotule de la biellette de direction.

3. Procédé de contrôle selon la revendication 1, **caractérisé en ce que** ladite valeur de seuil (« J ») de conformité est définie préalablement dans le cahier des charges de chaque rotule en fonction de l'application et du fournisseur de rotule.

## Patentansprüche

1. Verfahren zum Steuern des Spiels unterschiedlicher Gelenke, die auf einer Fahrzeugachse vorhanden sind, **gekennzeichnet durch** die folgenden Schritte, kombiniert genommen:
- Positionieren des Fahrzeugs derart, dass es nicht mehr auf seinen Rädern aufliegt, und dass die Wirkung der Aufhängungsfedern oder Torsionsstangen der Aufhängung annulliert wird,
- dann, für jede der Gelenke,
- Platzieren eines Komparators (40) auf dem zu messenden Gelenk (10) oder auf einem Element, das starr mit dem Gelenk verbunden ist, so dass das Spiel dieses Letzteren gemessen wird,
- Positionieren eines Werkzeugs (100), das einen Teil des Teils (30) der Achse, auf den das Gelenk (10) fest montiert ist und einen Endteil (3A) umfasst, der eine Anschlussschnittstelle bildet, die angepasst ist, um ein Werkzeug zum Anlegen eines mechanischen Moments aufzunehmen, das ausreicht, um den Wert des Spiels des Gelenks zu messen, fest zangenartig umschließt,
- Unterbringen eines Kraftmessschlüssels (50) in dem Endteil (3A) des Werkzeugs (100),
- Anlegen mit Hilfe des Kraftmessschlüssels (50) eines mechanischen Moments mit vorbestimmten Wert auf dem Teil des Teils (30) der Achse,
- Ablesen des Werts ("j") des Spiels des Gelenks (10) auf dem Komparator (40), und
- Vergleichen dieses Werts ("j") mit einem Schwellenwert ("J") mit vordefinierter Übereinstimmung, wobei das Gelenk (10) als übereinstimmend erklärt wird, wenn der Wert des Spiels ("j") kleiner ist als der Schwellenwert ("J").

2. Steuerverfahren nach Anspruch 1, **dadurch gekennzeichnet, dass** die Fahrzeugachse eine Vorderachse ist, und dass die Gelenke, die auf der Vorderachse vorhanden sind, eines oder mehrere der folgenden Gelenke sind: das untere Gelenk, das auf den Dreiecksquerlenker montiert ist, das Gelenk des Schwingarms der Querstabilisierungsstange, das Gelenk der Lenkschubstange.

3. Steuerverfahren nach Anspruch 1, **dadurch gekennzeichnet, dass** der Schwellenwert ("J") der Übereinstimmung vorab in dem Lastenheft jedes Gelenks in Abhängigkeit von der Anwendung und dem Gelenklieferanten definiert wird.

## Claims

1. A method for monitoring clearance of different articulations present on a vehicle axle system, **characterized by** the following steps, taken in combination:
- the vehicle is positioned such that it no longer rests on its wheels and the effect of the suspension springs or torsion bars of the suspensions is cancelled,
- then, for each of the articulations,
- a comparator (40) is placed on the articulation (10) which is to be measured or on an element linked rigidly to the articulation, so as to measure the clearance of the latter,
- a tool (100) is put in position, catching in grippers a portion of the piece (30) of the axle system on which the articulation (10) is integrally mounted, and comprising an end portion (3A) forming a connection interface suited to receive a tool for application of a mechanical torque sufficient to measure the value of the clearance of said articulation,
- a torque wrench (50) is housed in the end portion (3A) of the tool (100),
- with the aid of the torque wrench (50) a mechanical torque of predetermined value is applied on said portion of piece (30) of the axle system,
- the value ("j") is read of the clearance of the articulation (10) on the comparator (40), and
- this value ("j") is compared to a predefined conformity threshold value ("J"), the articulation (10) being declared in conformity if said value of the clearance ("j") is less than said threshold value ("J").

2. The monitoring method according to Claim 1, **characterized in that** the vehicle axle system is a front axle system and the articulations present on the front axle system are one or more of the following articulations: the lower articulation mounted on the suspension wishbone, the articulation of the anti-roll bar link rod, the articulation of the steering tie-rod.

3. The monitoring method according to Claim 1, **characterized in that** said conformity threshold value ("J") is defined in advance in the specifications of each articulation depending on the application and of the articulation supplier.
